Europäisches Patentamt

European Patent Office

Office européen des brevets

(19)

(11) **EP 0 739 465 B1**

(12) **EUROPÄISCHE PATENTSCHRIFT**

(45) Veröffentlichungstag und Bekanntmachung des Hinweises auf die Patenterteilung:
**06.06.2001   Patentblatt 2001/23**

(21) Anmeldenummer: **95906944.4**

(22) Anmeldetag: **13.01.1995**

(51) Int Cl.[7]: **F16H 61/38**

(86) Internationale Anmeldenummer:
**PCT/EP95/00135**

(87) Internationale Veröffentlichungsnummer:
**WO 95/20114 (27.07.1995 Gazette 1995/32)**

(54) **STEUERUNG FÜR EIN AUTOMATISCHES KRAFTFAHRZEUG-GETRIEBE**

CONTROL SYSTEM FOR AN AUTOMATIC TRANSMISSION IN A MOTOR VEHICLE

COMMANDE POUR BOITE DE VITESSES AUTOMATIQUE D'AUTOMOBILE

(84) Benannte Vertragsstaaten:
**DE ES FR GB IT**

(30) Priorität: **19.01.1994   EP 94100742**

(43) Veröffentlichungstag der Anmeldung:
**30.10.1996   Patentblatt 1996/44**

(73) Patentinhaber: **SIEMENS AKTIENGESELLSCHAFT**
**80333 München (DE)**

(72) Erfinder: **GRAF, Friedrich**
**D-93059 Regensburg (DE)**

(56) Entgegenhaltungen:
**EP-A- 0 375 155          EP-A- 0 471 102**
**EP-A- 0 576 703          EP-A- 0 626 527**
**WO-A-93/00532          WO-A-93/00624**
**WO-A-93/23689          DE-A- 3 341 652**
**US-A- 4 841 815**

- **PATENT ABSTRACTS OF JAPAN vol. 10, no. 181 (M-492) 25. Juni 1986 & JP,A,61 027 345 (NISSAN) 6. Februar 1986**
- **PATENT ABSTRACTS OF JAPAN vol. 17, no. 555 (M-1492) 6. Oktober 1993 & JP,A,05 155 223 (NISSAN) 22. Juni 1993**
- **Takahashi, A.: "Method of Predicting Driving Environment from the Driver's operational Inputs"; IFSA (FIP) Brüssel; 1991; Seiten 203-206**
- **Abel, D.: "Fuzzy-Control - eine Einführung ins Unscharfe"; AT Automatisierungstechnik Band 39; 1991; Heft 12**
- **Maier, U.; Petersmann, J.; Seidel, W.; Stohwasser, A.; Wehr, T.: "Porsche Tiptronic"; ATZ Automobiltechnische Zeitschrift, Band 92; 1990; Heft 6; Seiten 308-319**

EP 0 739 465 B1

**Beschreibung**

Die Erfindung betrifft eine Steuerung für ein automatisches Kraftfahrzeug-Getriebe nach dem Oberbegriff von Anspruch 1, wie es aus der EP 0 576 703 A1 bekannt ist.

Bei bekannten derartigen Getriebesteuerungen für Kraftfahrzeuge wird die Übersetzung des Getriebes in Abhängigkeit von der Fahrpedalstellung und von der Fahrgeschwindigkeit oder Motordrehzahl anhand von abgespeicherten Kennfeldern automatisch eingestellt. Dabei werden außerdem der Lastzustand des Kraftfahrzeugs und der Fahrstil des Fahrers berücksichtigt (EP-A 0 471 102, DE-C 33 41 652).

Bei anderen bekannten automatischen Getriebesteuerungen (US-A 4 841 815, EP-A 0 375 155, A. Takahashi, Method of Predicting Driving Environment, IFSA 1991, Brüssel, S. 203 bis 206) erfolgt die Auswahl des jeweils zu schaltenden Ganges durch Steuereinrichtungen, die nach den Methoden der Fuzzy-Logik arbeiten. Mit dieser Logik wird Expertenwissen, das durch Erfahrung gewonnen worden ist, in Form einer sogenannten Regelbasis beschrieben und damit für die Regel- oder Steuervorgänge des Getriebes verwendet.

Der Erfindung liegt die Aufgabe zugrunde, eine Getriebesteuerung zu schaffen, die die verschiedenen Einflußgrößen, insbesondere die Fahrdynamik, auf die einzustellende Getriebeübersetzung ohne großen Aufwand berücksichtigt, und die überschaubar und betriebssicher ist. Dadurch wird die Anpassung an unterschiedliche Fahrzeugtypen wesentlich erleichtert.

Diese Aufgabe wird durch eine Steuerung nach Patentanspruch 1 gelöst.

Die Vorteile der Erfindung liegen insbesondere darin, daß sich mit der Fuzzy-Logik in einfacher Weise viele Einflußgrößen berücksichtigen lassen, daß aber durch den Einsatz von abgespeicherten Daten (zum Beispiel in Stellkennfeldern) immer gewährleistet ist, daß das Übersetzungsverhältnis des Getriebes in erprobter Weise festgelegt wird. Außerdem können die nötigen Daten vorausberechnet werden.

Vorteilhafte Weiterbildungen der Erfindung sind in den Unteransprüchen niedergelegt.

Ausführungsbeispiele der Erfindung werden im folgenden anhand der Zeichnungen erläutert. Es zeigen:

| | |
|---|---|
| Figur 1 | die wesentlichen Bestandteile eines Kraftfahrzeugs mit einer erfindungsgemäßen Getriebesteuerung, in schematischer Darstellung, |
| Figur 2 | die Getriebesteuerung des Kraftfahrzeugs nach Figur 1 als Blockdiagramm, |
| Figuren 3 bis 6 | Beispiele von Stellkennfeldern der Getriebesteuerung nach Figur 2, |
| Figuren 7 bis 9 | dreidimensionale Darstellungen von Stellkennfeldern der Getriebesteuerung nach Figur 2, |
| Figur 10 | eine in der Getriebesteuerung nach Figur 2 für die Stellkennfeld-Auswahl verwendete Matrix, |
| Figur 11 | ein Ablaufdiagramm für die Stellkennfeld-Auswahl, |
| Figur 12 | eine Tabelle, die Bedingungen für die Zulassung von Schaltungen durch Wechsel des Stellkennfeldes enthält, und |
| Figur 13 | ein Fluß- oder Ablaufdiagramm, nach dem eine dynamische Korrektur des Übersetzungsverhältnisses durchgeführt wird, |
| Figur 14 | ein Ablaufdiagramm für eine weitere dynamische Korrektur der Getriebeübersetzung durch eine Fuzzy-Logik, und |
| Figur 15 | ein Fahrmanöver zur Erläuterung der dynamischen Korrektur der Getriebeübersetzung. |

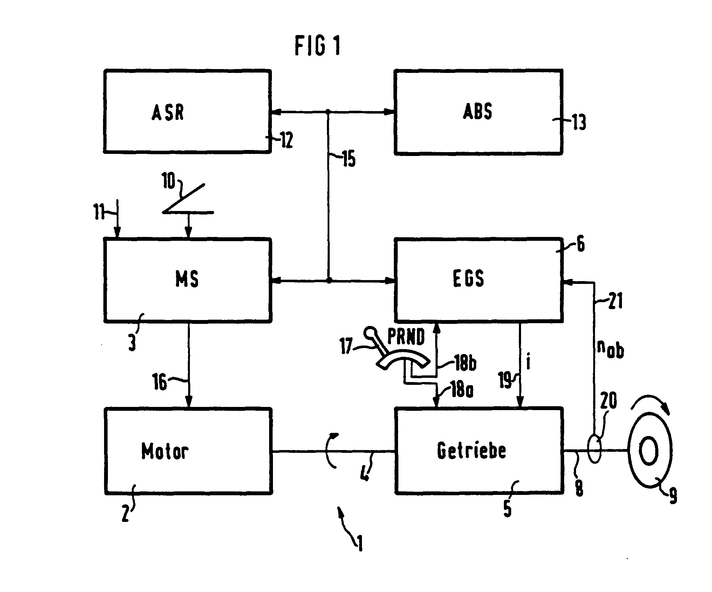

Ein schematisch dargestelltes Kraftfahrzeug 1 (Figur 1) weist einen Motor 2 auf, der von einer Motorsteuerung 3 gesteuert wird. Eine Motorabtriebswelle 4 ist über einen - hier nicht getrennt dargestellten - Drehmomentwandler mit einem automatischen Getriebe 5 verbunden, das von einer erfindungsgemäßen elektronischen Getriebesteuerung 6 gesteuert wird. Statt eines hydrodynamischen Drehmomentwandlers können auch hydraulische oder elektromagnetische Kupplungen oder mechanisch betätigte Trockenkupplungen eingesetzt werden. Das Getriebe 5 ist als stufenloses Getriebe ausgeführt. Eine Getriebeabtriebswelle 8 ist mit der angetriebenen Achse des Kraftfahrzeugs verbunden, die hier durch ein angetriebenes Rad 9 symbolisiert wird.

Über ein Fahrpedal 10 übermittelt der Fahrer des Kraftfahrzeugs seine Befehle - genaugenommen sind es seine Wünsche - an die Motorsteuerung 3. Bei Betätigung des - hier nicht dargestellten - Bremspedals des Kraftfahrzeugs gelangt ein, z.B. von einem nicht dargestellten Bremslichtschalter erzeugtes, Bremssignal über eine Leitung 11 zu der Motorsteuerung 3. Das Kraftfahrzeug 1 ist außerdem mit einer Radschlupf- oder Antischlupfregelung (ASR) 12 und einem Antiblokkiersystem (ABS) 13 versehen, die durch Signalleitungen 15 untereinander sowie mit der Motorsteuerung 3 und der Getriebesteuerung 6 zwecks Austausch von Signalen verbunden sind. Über eine Signalleitung 16 sendet die Motorsteuerung 3 an den Motor 2 Signale, mit denen die Zündung, die Einspritzung und die Drosselklappe gesteuert werden (letztere nur, wenn eine entsprechende Steuereinrichtung vorhanden ist).

Über einen Wählhebel 17 bestimmt der Fahrer in üblicher Weise den Fahrbereich des automatischen Getriebes 5. Die Wählhebelsignale gelangen über eine mechanische Verbindung 18a zu dem Getriebe 5 und über eine elektrische Signalleitung 18b zu der Getriebesteuerung 6. Die Getriebesteuerung 6 sendet über eine Signalleitung 19 Steuersignale an das Getriebe 5, die die jeweilige Übersetzung i einstellen. Die Drehzahl der Getriebeabtriebswelle 8 wird von einem Drehzahlsensor 20 über eine Signalleitung 21 an die Getriebesteuerung 6 gemeldet. Zumindest die Signalleitungen 15, die die Steuergeräte 3, 6, 12 und 13 miteinander verbinden, können aus Einzelleitungen oder aus einem bidirektionalen Bus, z.B. aus einem bekannten CAN- oder LAN-Bus, bestehen. Die Steuergeräte und -systeme 3, 12 und 13 müssen nicht vorhanden sein. Falls sie es aber sind, ist es von Vorteil, daß die Getriebesteuerung 6 auf die von ihnen gelieferten Sensorsignale (z.B. auf die Information üer die Raddrehzahlen) und davon abgeleiteten Größen zugreifen kann.

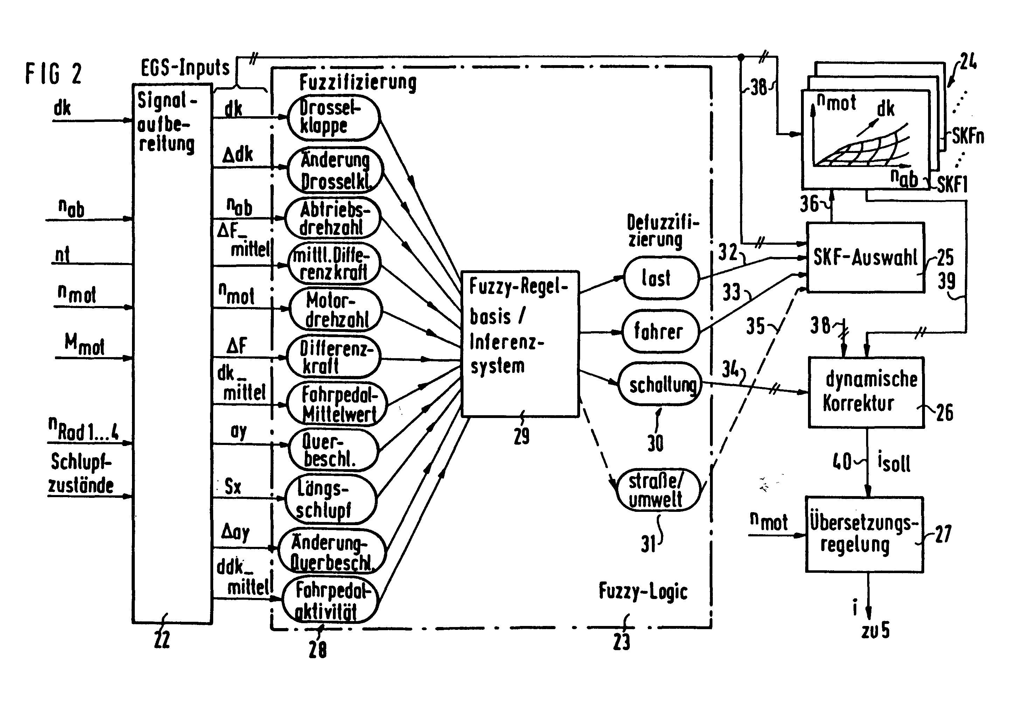

Die elektronische Getriebesteuerung 6 (Figur 2) weist folgende Bestandteile auf: eine Signalaufbereitungsschaltung (im folgenden abgekürzt: Signalaufbereitung) 22, eine Fuzzy-Logik-Steuerschaltung (im folgenden: Fuzzy-Logik) 23, einen Kennfeldspeicher 24 mit mehreren Stellkennfeldern oder Getriebeübersetzungs-Tabellen, eine Stellkennfeld-Auswahlschaltung (kurz: SKF-Auswahl) 25, eine dynamische Korrekturschaltung 26 und einen Übersetzungsregler 27. Dieser Regler kann auch als selbständige Einrichtung direkt an das Getriebe 5 angebaut sein.

In der Signalaufbereitung 22 werden mehrere Eingangssignale aufbereitet, die von verschiedenen Sensoren oder von den erwähnten weiteren Steuergeräten geliefert werden. Die Eingangssignale werden dabei in von der Fuzzy-Logik 23 oder anderen Steuerungsbestandteilen verarbeitbare charakteristische Größen - hier insgesamt als EGS-Inputs bezeichnet - gewandelt. Auf den in Figur 2 angedeuteten Eingangsleitungen gelangen (von oben nach unten) folgende Meßwerte oder Parameter zu der Signalaufbereitung 22: der sich in der Stellung der Drosselklappe dK oder allgemein des Fahrpedals niederschlagende Fahrerwunsch; die Getriebe-Abtriebsdrehzahl $n_{ab}$, die Turbinendrehzahl nt des Drehmomentwandlers; das Motordrehmoment $M_{mot}$; die Motordrehzahl $n_{mot}$; die Raddrehzahlen $n_{Rad1....4}$, sowie Schlupfzustands-Signale ("Schlupfzustände"). Diese Schlupfzustände können - alternativ zu einer Ermittlung aus den Raddrehzahlen - auch von der Radschlupfregelung 12 oder von dem Antiblockiersystem 13 geliefert werden. Die Getriebesteuerung 6 verfügt somit auch über Betriebsparameter oder Sensorsignale anderer Steuergeräte, falls solche vorhanden sind.

Fuzzy-Steuerungen als solche sind in der Literatur beschrieben (D. Abel: Fuzzy control - eine Einführung ins Unscharfe, AT 39 (1991) Heft 12). Durch eine Fuzzifizierung werden die exakt bestimmten (engl. crisp) Größen der Eingangsparameter in linguistische Variablen abgebildet. Nachfolgend werden in einem Inferenzsystem die in Form einer sog. Regelbasis abgelegten linguistischen Regeln abgearbeitet und es wird eine unscharf formulierte Stellgröße bestimmt. In diesen Regeln (siehe Beispiel weiter hinten) ist das gewünschte Systemverhalten festgelegt, sie basieren auf dem Wissen erfahrener Experten. Die durch Inferenz bestimmte Stellgröße wird durch eine Defuzzifizierung in eine physikalische Stellgröße - allgemein: eine "scharfe" Information - umgesetzt, die dann den zu steuernden Prozeß als Stellgröße direkt beeinflußt.

Die in der Signalaufbereitung 22 (Figur 2) in kontinuierliche Größen umgewandelten Meßwerte und abgeleiteten Größen gelangen über aus der Zeichnung ersichtliche Leitungen zu einem Fuzzifizierer 28 der Fuzzy-Logik 23 und werden dort in linguistische Variablen umgesetzt und an ein eine Fuzzy-Regelbasis enthaltendes Inferenzsystem 29 übermittelt. Mit den in der Regelbasis definierten Regeln wird der Lastzustand des Kraftfahrzeugs berechnet, eine Fahrererkennung durchgeführt, d.h. bestimmt, ob das Fahrverhalten des Fahrers sportlich oder verbrauchsorientiert ist, und schließlich festgelegt, ob eine Hoch- der eine Rückschaltung - oder allgemein ein Ändern der Übersetzung, d.h. des Übersetzungsverhältnisses i - erlaubt oder verboten ist. Die Fuzzy-Logik fungiert sozusagen als Experte zum Ermitteln solcher entscheidender Parameter.

Das Inferenzsystem 29 erzeugt entsprechend drei Signale "last", "fahrer" und "schaltung" und gegebenenfalls ein weiteres Signal "straße/umwelt", die in drei Defuzzifizierern 30, gfs. durch einen weiteren Defuzzifizierer 31 ergänzt, in physikalische Stellgrößen umgewandelt werden und als Ausgangssignale der Fuzzy-Logik 23 das Übersetzungsverhältnis i des automatischen Getriebes steuern. Sie gelangen dazu über Signalleitungen 32, 33, 34 und 35 zu weiteren Schaltungsbestandteilen 25 und 26. Die Leitung 34 ist als Mehrfachsignalleitung oder Datenbus ausgebildet.

Das "last"- und das "fahrer"-Signal und gfs. das Signal "straße/umwelt", werden in der SKF Auswahl 25 miteinander verknüpft und ergeben ein "auswahl"-Signal, das über eine Signalleitung 36 zu dem Kennfeldspeicher 24 gelangt und dort das in dem jeweiligen Fall günstigste Stellkennfeld auswählt. Eingangssignale des Kennfeldspeichers 24 sind z.B. der Fahrerwunsch (Drosselklappenstellung dK) und die Getriebeabtriebsdrehzahl $n_{ab}$. Es können auch weitere Signale aus den EGS-Inputs, die die Soll-Motordrehzahl bestimmen, über eine Mehrfach-Signalleitung 38 als Eingangssignale in die SKF Auswahl 25 und in die dynamische Korrekturschaltung 26 gelangen. Diese kann auch direkt eine Sollübersetzung $i_{soll}$ oder einen Getriebegang bestimmen.

Das Signal "last" ist ein Maß für extern bedingte Lastzustände in Form einer erhöhten Fahrzeugbeladung und/oder des Befahrens einer Steigung oder eines Gefälles, und aus ihm resultiert das Erfordernis, das Schaltverhalten oder die Übersetzung des Getriebes an den neuen Lastzustand anzupassen. Das Signal "fahrer" beschreibt die Fahrweise des Fahrers, die indirekt aber auch durch extern bedingte Umstände wie den Typ der Fahrstrecke (Stadt, Landstraße, Autobahn) beeinflußt sein kann. Die Klassifikation der Fahrstrecke kann auch durch eine zusätzliche Regelbasis erfolgen, die weitere Informationen über den Verkehrsfluß (z.B. "stop and go"-Verkehr) und über die Häufigkeit von Kurven und Steigungen liefert (vergleiche die nach dem Anmeldetag veröffentlichte Druckschrift EP-A-0 626 527).

Das aus den vorstehend genannten Signalen erzeugte Signal "auswahl" bewirkt in dem Kennfeldspeicher 24 die Auswahl jeweils geeigneter Stellkennfelder "SKF1 bis SKFn". Dazu existieren unterschiedliche Möglichkeiten. Im Ausführungsbeispiel werden beim Über- oder Unterschreiten scharfer Grenzen für die Signale geeignete Stellkennfelder SKF1 bis SKFn selektiert. Dabei hat die Anpassung an die externen Lastzustände Vorrang vor der Anpassung an den Fahrstil. Eine andere Möglichkeit besteht darin, Stellkennfelder ganz oder teilweise zu verschieben, zum Beispiel bei einer Bergfahrt zu höheren Motordrehzahlen hin.

Die Stellkennfelder in dem Kennfeldspeicher 24 legen anhand der über die Signalleitung 38 empfangenen EGS-Inputs $n_{mot}$, dK, nab und des Signals "auswahl" eine Soll-Motordrehzahl fest, die über eine Signalleitung 39 an die dynamische Korrekturschaltung 26 übermittelt wird. Alternativ kann auch die Soll-Übersetzung $i_{soll}$ festgelegt werden.

In der dynamischen Korrekturschaltung 26 kann die Fuzzy-Logik 23 mit dem Signal "schaltung" aktiv eingreifen und bestimmte Übersetzungsänderungen unterdrücken (eine Hoch- oder Rückstellung) oder jede Verstellung der Übersetzung verhindern. Mit dem Signal "schaltung" werden Verstellvorgänge, die sich aus den Stellkennfeldern ergeben, dynamisch korrigiert. Ein Beispiel ist die schnelle Kurvenfahrt. Bei einem ausschließlichen Festlegen des Schaltverhaltens durch Kennfelder wird häufig beim Kurveneinlauf, wenn der Fahrer vom Gas geht, hochgeschaltet, d.h. auf eine höhere Übersetzung "hochgestellt" und beim Kurvenauslauf, wenn der Fahrer wieder Gas gibt, zurückgeschaltet oder "zurückgestellt". Diese die Fahrstabilität und den Fahrkomfort beeinträchtigenden und den Verschleiß fördernden Schaltvorgänge werden hier aber verhindert. Es wird bei dem Festlegen der Übersetzung ganz allgemein der fahrdynamische Zustand des Kraftfahrzeugs berücksichtigt.

Ein anderes Beispiel sind Schlupfzustände zwischen den Rädern des Kraftfahrzeugs und der Fahrbahn: die Fuzzy-Logik 23 vermeidet oder verzögert über die dynamische Korrekturschaltung 26 Übersetzungsverstellungen, die die Fahrstabilität negativ beeinträchtigen könnten. Darüber hinaus bewirkt die dynamische Korrektur-schaltung 26, wenn sie eine Verstellung zuläßt, ein derartiges Ansteuern der elektro-hydraulischen Aktuatoren in dem Getriebe 5, daß Übersetzungswechsel nur dann erfolgen, wenn sie für den Fahrer einleuchtend sind. Der Übersetzungsregler 27 stellt schließlich anhand des von der dynamischen Korrekturschaltung 26, über eine Signalleitung 40 empfangenen Signals $i_{soll}$

die erforderliche Getriebeübersetzung i her und steuert damit das Getriebe 5. Alternativ kann er auch die Motordrehzahl regeln.

Durch das in der Fuzzy-Regelbasis enthaltene Expertenwissen werden eine verbesserte Fahrstabilität und ein erhöhter Fahrkomfort erreicht, die Überschaubarkeit und Anpassungsfähigkeit der Getriebesteuerung wird durch die Verwendung von Stellkennfeldern oder von anderen im vorhinein ermittelten und gespeicherten Daten gewährleistet. Bei der Festlegung der Stellkennfelder sind viele Informationen eingearbeitet worden, z.B. die Momentenreserve bei der jeweiligen Abtriebs- und Motordrehzahl, der Kraftstoffverbrauch usw., die damit der Getriebesteuerung unmittelbar zur Verfügung stehen. Diese wird dadurch von der sehr aufwendigen Berechnung dieser Informationen entlastet. Unzulässig hohe oder niedrige Motordrehzahlen werden sicher verhindert.

Die Programme der Fuzzy-Logik 23 werden mit Hilfe eines CAE-Werkzeugs oder -Tools als Programm in der höheren Programmiersprache C oder direkt als Objektcode erstellt. Neben dieser Ausführung als auf einem Mikrorechner ablaufende Programme kann die Fuzzy-Logik 23 aber auch in Hardware, z.B. als Peripherieeinheit eines Rechnersystems realisiert werden.

In der Signalaufbereitung 22 werden aus den Eingangssignalen auch abgeleitete Größen berechnet:

Eine Fahrpedal-Verstellgeschwindigkeit $\Delta dK$ wird aus der zeitlichen Änderung des zyklisch abgetasteten Wertes der Fahrpedalstellung berechnet.

Ein Fahrpedal-Mittelwert dK_mittel stellt den Mittelwert über einen vorgegebenen Zeitraum des durch die Drosselklappenstellung dK gegebenen Fahrerwunsches dar und wird zur Berechnung des Fahrstils herangezogen, und zwar in einer Regelbasis RB_Fahrer, die Bestandteil des Inferenzsystems 29 ist. Dieser Mittelwert wird folgendermaßen berechnet:

$$dK\_mittel,n = (\Sigma dK,n - dK\_mittel,n-1) / p$$

hierin sind:

$$\Sigma dK,n = dK * k + \Sigma dK,n-1,$$

p  die Anzahl der Berechnungszyklen, bis nach einer sprunghaften Änderung von dK ein neuer Mittelwert erreicht ist (z.B. p = 256), und

k  ein Normierungsfaktor zur Bewertung des aktuellen dK-Wertes (k > 1), und

n  der n-te Berechnungszyklus.

Die Fahrzeug-Querbeschleunigung ay wird aus den von Drehzahlsensoren gelieferten Radgeschwindigkeiten wie folgt berechnet:

$$ay = \frac{(v_{vr} - v_{vl}) * (v_{vl} + v_{vr})}{2b}$$

darin sind:

b     = die Spurweite an der nicht angetriebenen Achse,

$v_{vl}$     = die Radgeschwindigkeit vorne links und

$v_{vr}$     = die Radgeschwindigkeit vorne rechts (jeweils bei Heck- oder Allradantrieb; bei Frontantrieb werden die hinteren Radgeschwindigkeiten eingesetzt)

Die Radgeschwindigkeiten werden aus den gemessenen Raddrehzahlen berechnet.

Die vorstehende Berechnung der Querbeschleunigung ay ist nur dann korrekt, wenn keine signifikanten Schlupfzustände vorliegen. Da aber im Fall von Schlupfzuständen andere Regeln höher priorisiert sind als der Einfluß der Querbeschleunigung, wirkt sich der Verlust der Aktualität von ay nicht aus, wenn ay bei Vorhandensein von Schlupf auf einen Ersatzwert gesetzt wird.

Eine andere abgeleitete Größe ist die Differenzkraft ΔF, die sich folgendermaßen berechnen läßt:

$$\Delta F = F_b(t) - F_L(t) - F_R(t) - m_{Fzg} * \frac{d}{dt} n_{ab}(t) - F_{br}(t)$$

hierin sind:

$F_b(t)$       = die Antriebskraft

$F_L(t)$       = der Luftwiderstand

$F_R(t)$       = der Rollwiderstand

$m_{Fzg} * \frac{d}{dt} nab(t)$       = der Beschleunigungswiderstand und

$F_{br}(t)$       = die Bremskraft

ΔF stellt die Kraftbilanz der auf das Kraftfahrzeug einwirkenden Kräfte am Getriebeabtrieb dar. In der Ebene muß sie ohne äußere Last - z.B. Zuladung oder Anhängerbetrieb - gleich null sein. Ist sie es nicht, so läßt sich daraus eine erhöhte Fahrzeugmasse, eine Fahrbahn-Neigung und/oder eine äußere Last (Zuladung, Anhängerbetrieb usw.) erkennen.

Eine mittlere Differenzkraft ΔF_mittel ist ein Maß für die Fahrbahnsteigung oder -Neigung und/oder die Fahrzeugbeladung. Sie stellt den Mittelwert der Differenzkraft ΔF in einem Zeitintervall z dar. Mit ihr ist es z.B. möglich, eine stark hügelige oder bergige Fahrstrecke und/oder eine erhöhte Fahrzeugbeladung zu erkennen und ein entsprechendes Verhalten des Getriebes 5 mit einer Regelbasis RB_Last auch über eine längere Zeit zu gewährleisten. Damit wird beispielsweise nach einer langen Steigung ein lastadaptives Stellkennfeld beibehalten, d.h. eine anschließende Hochschaltung wird unterbunden. Es steht dann eine kleinere Übersetzung mit besserer Motorbremswirkung bei der nachfolgenden Bergabfahrt zur Verfügung. Somit werden mit dem Ziel, bergab und bergauf die gleiche Übersetzung zu benutzen, überflüssige Hoch- und Rückverstellungen bei einer hügeligen Landstraße vermieden.

Anhand der mittleren Differenzkraft ΔF_mittel läßt sich auch das Befahren einer Paßstraße mit einer Regelbasis RB_Straße des Inferenzsystems 29 erkennen. Die Berechnung der mittleren Differenzkraft ist wie folgt:

$$\Delta F\_mittel,n = (\Sigma \Delta F,n - \Delta F\_mittel,n-1) \,/\, p$$

hierin sind:

$$\Sigma \triangle F,n = k*|\Delta F| + \Sigma \Delta F,n-1,$$

k     ein Normierungsfaktor zur Bewertung des Betrags der aktuellen Differenzkraft,

n     der Berechnungszyklus und

p     die Anzahl Berechnungszyklen, bis nach einer sprunghaften Änderung von |ΔF| ein neuer Mittelwert erreicht ist (z.B p = 256).

Eine Fahrpedalaktivität ddK_mittel repräsentiert die Häufigkeit der Verstellung des Fahrpedals in einem Zeitintervall z und sie wird wie folgt berechnet:

$$ddK\_mittel,n = (\Sigma ddK\_mittel,n - ddK\_mittel,n-1) \,/\, p$$

wobei

$$\Sigma ddK\_mittel,n = k*|\Delta dK| + \Sigma ddk\_mittel, n-1$$

ist.

Für k, n und p gilt gleiches wie oben. Δdk stellt die Fahrpedal-Verstellgeschwindigkeit dar.

Die vorstehenden Berechnungen der mittleren Differenzkraft und der Fahrpedalaktivität entsprechen einer vereinfachten gleitenden Mittelwertbildung.

Kann die Bremskraft von einem ABS-Steuergerät oder einem entsprechenden Sensor geliefert werden, so läßt sich nach vorstehender Gleichung ein aussagefähiger Wert für die Differenzkraft berechnen. Wird die Bremskraft nicht geliefert, so muß dies im Falle einer Bremsung berücksichtigt werden.

Die Raddrehzahlen werden wie erwähnt zum Berechnen der Querbeschleunigung und des Radschlupfes herangezogen. Dabei können bereits kleine Drehzahlunterschiede zu signifikanten Werten der berechneten Größen führen. Es ist deshalb notwendig, Fehlberechnungen durch Änderungen des Umfangs eines oder mehrerer Räder, z.B. durch einen Reifenwechsel oder durch das Anlegen von Schneeketten zu erkennen und zu korrigieren. Andernfalls würden z.B. Hochschaltungen bei erkannter Kurvenfahrt wegen großer Querbeschleunigung fehlerhafterweise gesperrt. Dies kann folgendermaßen vermieden werden: Nach einem Neustart der Getriebesteuerung 6, d.h. nach einem Einschalten der Zündung, muß die berechnete Querbeschleunigung für eine vorgegebene Zeit unter einem Grenzwert liegen, andernfalls wird sie für die Dauer des laufenden Betriebszyklus gleich null gesetzt.

Es wird dabei vorausgesetzt, daß ein Fahrer z.B. für zwei Minuten nach einem Neustart nicht sofort dauerhaft mit hoher Querbeschleunigung mit konstantem Vorzeichen fährt. Tritt dagegen der Fall auf, daß die Querbeschleunigung nur kurz den Grenzwert überschreitet und dann wieder auf einen kleinen Wert abfällt, wird sie als plausibel betrachtet und für die Steuerung übernommen.

Die Ausgangssignale "last" und "fahrer" und gfs. "straße/umwelt" der Fuzzy-Logik 23 und das zu einem Zeitpunkt t aktive Stellkennfeld SKF(t) bestimmen das Stellkennfeld zum nachfolgenden Zeitpunkt SKF (t+1). Dabei beträgt die Zykluszeit etwa 20 ms. Die in dem Kennfeldspeicher 24 abgelegten Stellkennfelder sind aufeinander abgestimmt. Im vorliegenden Ausführungsbeispiel existieren drei fahreradaptive Stellkennfelder E ("economy"), M ("mittel") und S ("sport") und zwei lastadaptive Stellkennfelder TA ("teiladaptiv") und A ("adaptiv"). Bei den fahreradaptiven Stellkennfeldern erfolgen die Hochverstellungen von E über M nach S mit zunehmender Abhängigkeit von der Abtriebsdrehzahl $n_{ab}$. Das Stellkennfeld TA bewirkt nur Rückverstellungen bei mittlerer Fahrzeuggeschwindigkeit oder Abtriebsdrehzahl.

Die Wirkung eines stufenlosen Getriebes im Zusammenhang mit dem Motor soll im folgenden kurz beschrieben werden, um dann den Aufbau der Stellkennfelder zu erklären.

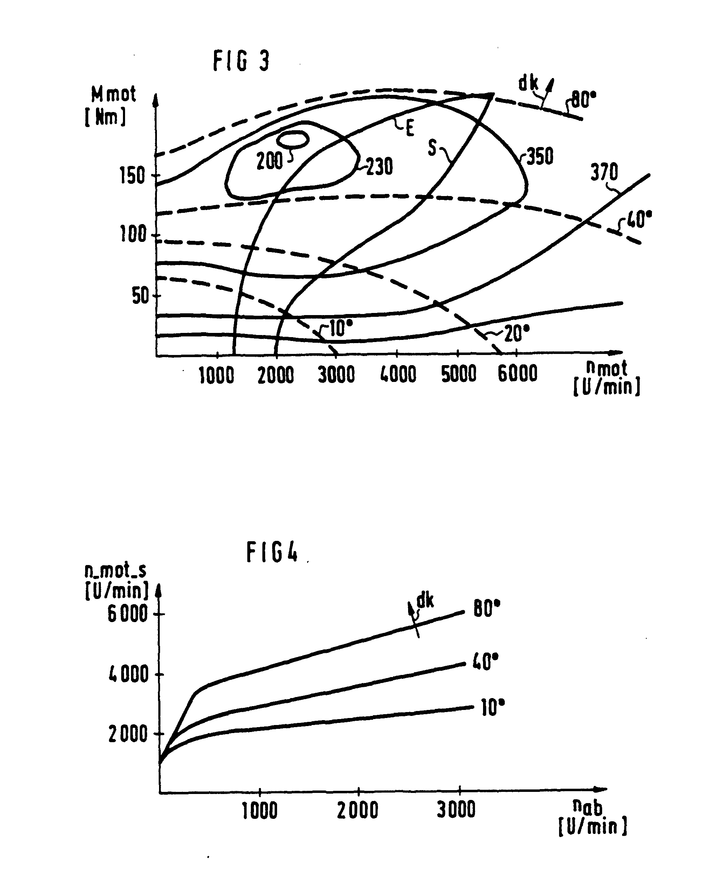

Die Figur 3 gibt das typische Verhalten eines Ottomotors wieder. Die geschlossenen Linienzüge zeigen abhängig von den Betriebspunkten Motordrehzahl $n_{mot}$ und Motordrehmoment Mmot den spezifischen Verbrauch in g/kWh. Es ist zu erkennen, daß in einem zunehmend kleiner werdenden Bereich der Wirkungsgrad steigt.

Die gestrichelten Linien repräsentieren das abgegebene Motordrehmoment $M_{mot}$ in Abhängigkeit von der Motordrehzahl $n_{mot}$ und von der Drosselklappenstellung dK als Parameter. Es wird deutlich, daß mit einem stufenlosen Getriebe die Forderung, den Motor in Bereichen des geringsten spezifischen Verbrauchs zu betreiben, besser zu erfüllen ist als mit einem Getriebe mit festen Übersetzungsstufen. Durch stufenloses Verstellen der Übersetzung des Getriebes kann die Motordrehzahl unabhängig von der Abtriebsdrehzahl des Getriebes eingestellt werden.

Allerdings stehen Stellkennlinien, wie z.B. eine "economy"-Stellkennlinie E in Figur 3, einer Optimierung der Fahrleistung entgegen. Eine "sport"-Stellkennlinie S erlaubt eine gleiche Motorleistung bei einem kleineren Drosselklappenwinkel; durch die größere Übersetzung (einem "kleineren Gang" entsprechend) ist eine höhere Fahrleistung erreichbar. Hier bewirkt eine automatische Anpassung durch Auswahl unterschiedlicher Strategien bei der Einstellung der Übersetzung ein bedarfsgerechtes Verhalten. Als Eingangsparameter für die Stellkennlinien E und S dient nur die - den Fahrerwunsch wiedergebende - Fahrpedal- oder Drosselklappenstellung dK. Anhand von Figur 3 wird daraus die einzustellende Motordrehzahl bestimmt.

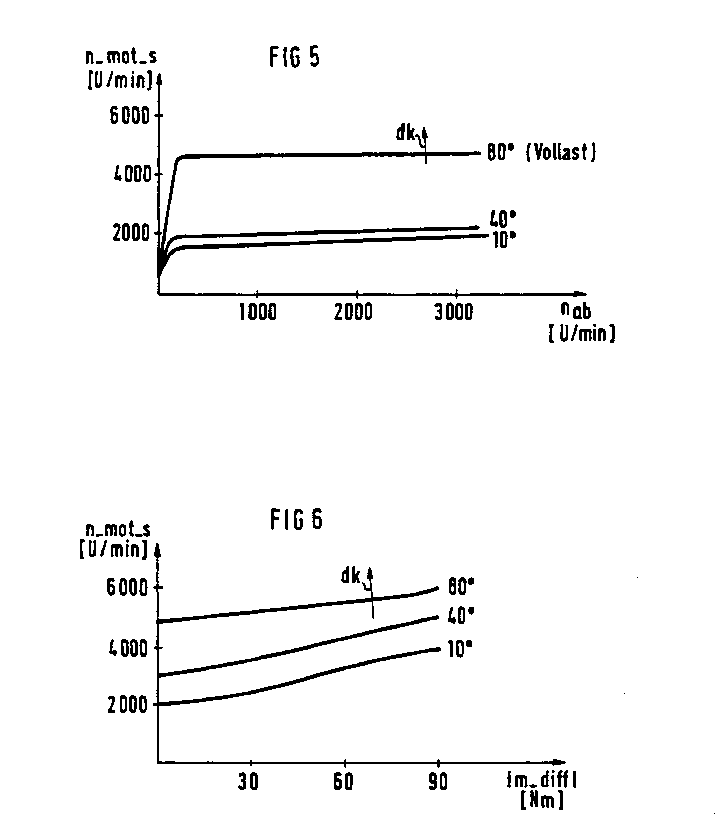

Weitere Abhängigkeiten der Betriebsgrößen des Kraftfahrzeuges können durch Stellkennfelder dargestellt werden. Bei fahreradaptiven Stellkennfeldern wird die Übersetzung oder die Motordrehzahl so eingestellt, daß bei leistungsbetonter Fahrweise die Motordrehzahl enger an die Fahrzeuggeschwindigkeit gekoppelt wird. Damit entsteht für den Fahrer ein intensiveres Beschleunigungserlebnis. Dies ist aus dem Diagramm von Figur 4 ersichtlich, in dem die Motor-Solldrehzahl $n\_mot\_s$ abhängig von der Abtriebsdrehzahl $n_{ab}$ und mit der Drosselklappenstellung dK als Parameter dargestellt ist. Bei moderater Fahrweise hingegen bleibt der Motorbetriebspunkt in Bereichen geringen Verbrauchs, außer bei Vollast- oder Kickdown-Betrieb, wie sich aus dem Diagramm von Figur 5 ergibt, dessen Darstellung der von Figur 4 entspricht.

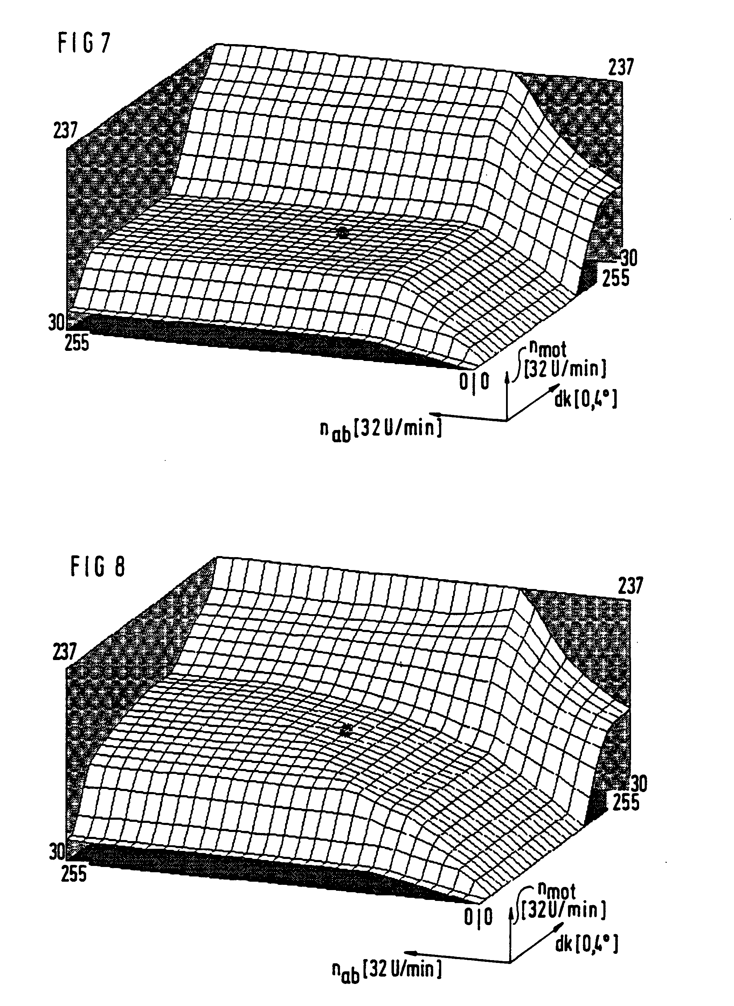

Bei signifikanten Werten des Signals "last", z. B. bei Bergauffahrt, muß die Übersetzung des Getriebes derart eingestellt werden, daß am Getriebeausgang genügend Drehmoment für Beschleunigungsvorgänge zur Verfügung steht, da ja ein Teil des gesamten Drehmoments für die Bergauffahrt benötigt wird. Dies kann, wie bei leistungsorientierter Fahrweise, durch Wahl einer höheren Motordrehzahl bei kleinerer Übersetzung geschehen. Die Motor-Solldrehzahl $n\_mot\_s$ ist hier abhängig von der Drosselklappenstellung dK und von dem Betrag des Differenzmomentes $|m\_diff|$, wie aus dem Diagramm von Figur 6 ersichtlich ist. Durch die Betragsbildung ist ein gleiches Verhalten bei Bergauf- und Bergabfahrt gewährleistet.

Es können auch andere Abhängigkeiten der Motorbetriebszustände berücksichtigt werden, z.B. von der Drosselklappenstellung dK und von dem "last"-Signal. Zu diesem Zweck empfängt der Kennfeldspeicher 24 (Figur 2) als Eingangssignale alle EGS-Inputs über die Signalleitung 38.

Ein weiteres Optimierungskriterium für ein Stellkennfeld ist die Minimierung der Abgasemissionen. Mit einem derart gestalteten Stellkennfeld wird der Motor dann in einem entsprechenden Betriebsbereich betrieben, wobei für möglichst stabile Betriebsbedingungen gesorgt wird, damit die Abgasreinigung unter günstigsten Bedingungen arbeiten kann. Ein Beispiel für einen dabei zu vermeidenden Bereich, da mit größeren Kohlenwasserstoff- (oder HC-)Emissionen verbunden, ist der Motorbetrieb mit kleiner Last (dK) bei größerer Motordrehzahl (ab etwa 4000 U/min).

Ein derartiges Betriebsverhalten ist besonders im Stadtverkehr von Bedeutung und es wird im folgenden ein Beispiel mit den Eingangssignalen dK, $n_{ab}$, "last" und "fahrer" beschrieben. Durch eine weitere Fuzzy-Logik mit einer Regelbasis, die den Kennfeldspeicher 24 ersetzen, wird zum Beispiel aus den Eingangsgrößen dK, $n_{ab}$, "last" und "fahrer" eine Soll-Motordrehzahl bestimmt. Dabei werden die Vorteile der Fuzzy-Methode deutlich, nämlich die Möglichkeit, mehrere Informationen über Regeln derart zu verknüpfen, daß sie ein übersichtliches Gesamtverhalten der gesteuerten Einrichtung ergeben. Die Schlußfolgerungen aus den Regeln können dabei variiert werden. Die weitere Fuzzy-Logik ist nicht dargestellt, da sie der Fuzzy-Logik 23 entspricht.

Das Verhalten eines mit Hilfe von CAE (= Computer Aided Engineering)-Werkzeugen entworfenen Fuzzy-Systems kann in anschaulicher Weise graphisch dargestellt werden, wie aus den Figuren 7, 8 und 9 ersichtlich ist. In diesen sind das Motordrehmoment $n_{mot}$ und die Abtriebsdrehzahl $n_{nab}$ abhängig von dem Drosselklappenwinkel dK bzw. dem "last"-Signal dreidimensional dargestellt.

Die Regeln der Regelbasis lauten hier wie folgt:

Regel 1:
IF $n_{ab}$ IS very-low OR dK IS low THEN n_mot_s = very-low

Regel 2:
IF dK IS medium THEN n_mot_s = medium

Regel 3:
IF dK IS very-high THEN n_mot_s = very-high

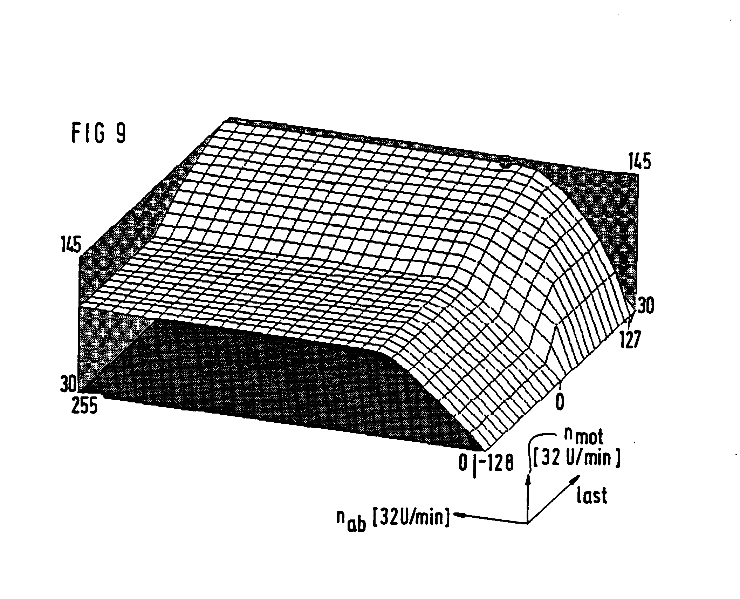

Damit läßt sich ein Verhalten wie in Figur 7 dargestellt erreichen. Diese Figur ist, wie die Figuren 8 und 9, mit dem CAE-Werkzeug erstellt worden und mit solchen Darstellungen läßt sich das entworfene Fuzzy-System analysieren, bevor es in der elektronischen Getriebesteuerung 6 (Figur 1) implementiert wird. Ersichtlich ist, daß hier ein ähnliches Verhalten wie bei dem Stellkennfeld nach der Figur 5 erreicht wird: es wird in großen Bereich dem Motor ein Betriebsverhalten vorgegeben, der den geringstmöglichen Verbrauch ergibt. Durch eine zusätzliche Regel läßt sich das Verhalten des Fahrers berücksichtigen:

Regel 4:
IF $n_{ab}$ IS high AND dK IS high AND fahrer IS high THEN n_mot_s = high
Dadurch entsteht eine Abhängigkeit der Soll-Motordrehzahl n_mot_s von der Abtriebsdrehzahl nab und der Drosselklappenstellung dK, wie sie in Figur 8 dargestellt ist. Hier wird die Soll-Motordrehzahl bei einem leistungsorientierten Fahrstil stärker an die Abtriebsdrehzahl angebunden. Außerdem ist das Drehzahlniveau des Motors allgemein angehoben (vgl. auch Figur 4). Das Verhalten des Diagramms nach Figur 7 dagegen gilt für kleine Werte des Signals "fahrer".

Wird ein extern bedingter Lastzustand durch hohe Werte des Signals "last" angezeigt, so kann dies mit folgender Regel umgesetzt werden:

Regel 5:
IF last IS positiv THEN n_mot_s = high

Wird diese Regel mit wachsendem positivem Wert des Signals "last" wirksam, so steigt n_mot_s an. Dies ist bei einer Bergfahrt der Fall (vgl. auch Figur 6), wobei ein kleiner Wert des Signals "fahrer" zugrunde gelegt ist. Das Ergebnis ist in der Figur 9 dargestellt.

Die vorstehend erläuterten Beispiele zeigen, daß mit einem regelorientierten Funktionsansatz nach der Fuzzy-Methode schnell und einfach eine Steuerung realisiert werden kann. Werden im Gegensatz dazu Stellkennfelder vorgegeben, so müssen diese mit größerem Zeitaufwand punktweise definiert werden. Außerdem wird mit den beschriebenen Beispielen die Fuzzy-Logik 23 konsequent weitergeführt, indem die Signale "last" und "fahrer" in Form einer mehrwertigen Information die resultierende Soll-Motordrehzahl kontinuierlich beeinflussen. So bewirken beispielsweise unterschiedliche Werte des Signals "fahrer" ein Verhalten, das zwischen den Darstellungen nach Figur 7 und 8 liegt.

Werden dagegen vorausberechnete Stellkennfelder benutzt, so sind diese durch die SKF-Auswahl 25 zu selektieren. Diese Selektion der Stellkennfelder wird im folgenden beschrieben:

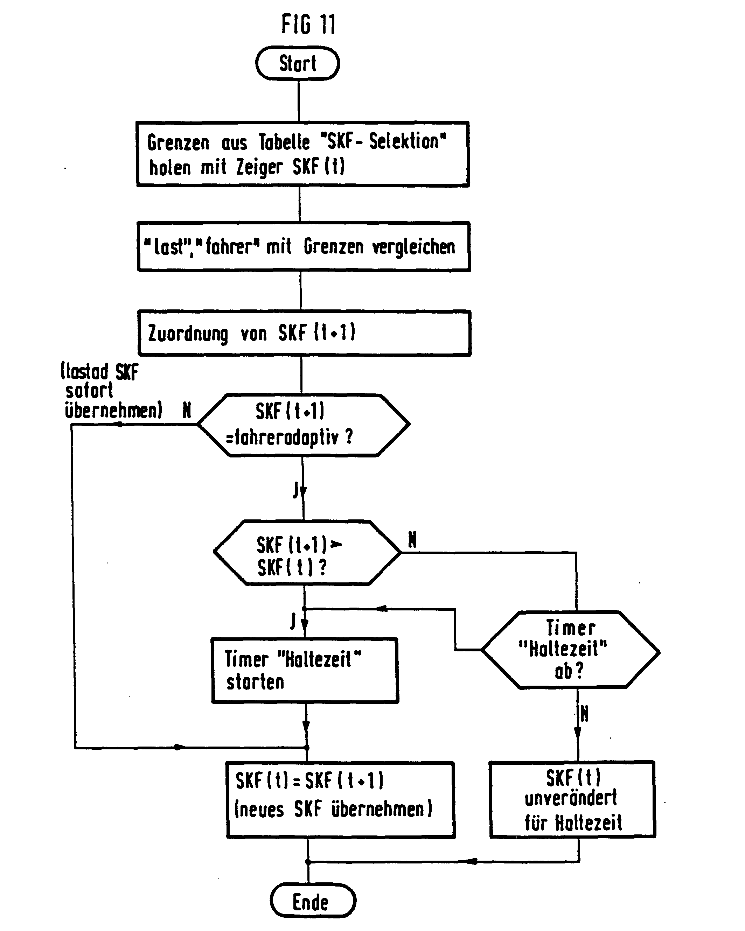

Ist ein fahreradaptives Stellkennfeld gewechselt worden, so bleibt es eine vorgegebene Haltezeit unverändert aktiv, um häufige Schaltungen durch Schwankungen der genannten Auswahlsignale zu vermeiden. Allerdings setzt sich ein fahrleistungsorientiertes Stellkennfeld immer sofort gegen ein ökonomischeres Stellkennfeld durch, um z.B. bei einem Überholvorgang dem Fahrer sofort die erforderliche Beschleunigung durch geeignetes Schaltverhalten des Getriebes zur Verfügung zu stellen (siehe auch Fig. 11). Die Dauer der Haltezeit kann von dem Verhalten des Fahrers abhängig gemacht werden, um z.B. bei sehr hoher Leistungsanforderung, d.h. bei großem Signal "fahrer" längere Haltezeiten bei einer Aktivierung des S-Stellkennfeldes zu bewirken. Derartige Funktionalitäten sind aber abhängig von dem Motor, der Karosserie und dem Getriebe des jeweiligen Kraftfahrzeugtyps.

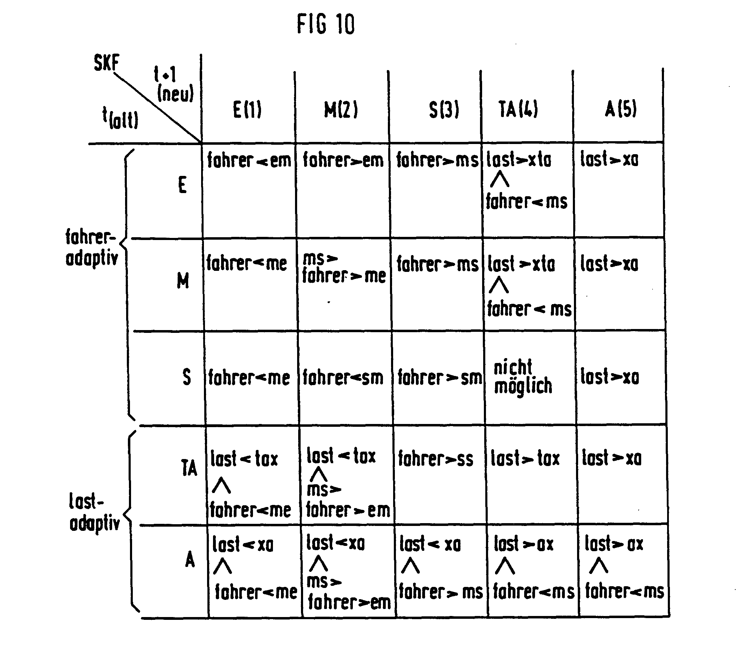

Die aus Figur 10 ersichtliche Matrix enthält die Bedingungen, die beispielsweise die Ausgangssignale "fahrer" und "last" der Fuzzy-Logik 23 erfüllen müssen, um von einem "alten", d.h. zu einem gegebenen Zeitpunkt t benutzten, Stellkennfeld (linke Spalte) zu einem "neuen", in einem Zeitpunkt t+1 überzugehen. Die Größen em, ms, xta, xa, me, sm, tax und ax sind vorgebbare Grenzwerte für die beiden Signale "fahrer" und "last". Das Zeichen Λ stellt eine UND-Verknüpfung dar.

Um z.B. von einem fahreradaptiven E-Stellkennfeld zu einem lastadaptiven, teiladaptiven TA-Stellkennfeld zu wechseln, muß das Signal "last" größer als ein Grenzwert xta und das Signal "fahrer" kleiner als ein Grenzwert ms sein. Ein Wechsel von dem S-Stellkennfeld zu dem TA-Stellkennfeld wird nicht zugelassen, da das sportliche S-Stellkennfeld auch die Bedingungen für das Befahren von Straßen mit mäßigen Steigungen, für die das teiladaptive Stellkennfeld vorgesehen ist, erfüllt.

Es können einerseits mehr als fünf Stellkennfelder mit jeweils feinerer Abstufung verwendet werden, die Ausgangssignale der Fuzzy-Logik 23 können aber auch dazu eingesetzt werden, eines oder einige wenige Grundkennfelder zu verändern. Dazu werden mit dem Signal "fahrer" und gegebenenfalls mit dem Signal "last" die Kennfelder verschoben oder so verändert, wie es aus den Figuren 4 bis 6 ersichtlich ist. So wird zum Beispiel bei leistungsorientierter Fahrweise die Abhängigkeit der Motordrehzahl von der Abtriebsdrehzahl des Getriebes verstärkt. Damit läßt sich die Anzahl erforderlicher Grundkennfelder und der Aufwand, einzelne Kennfelder zu selektieren, verringern.

Die Grenzwerte in der Matrix von Figur 10 werden in Fahrversuchen ermittelt. Sie müssen eine vorgegebene Hysterese zwischen dem Aktivieren und dem Verlassen eines Stellkennfeldes aufweisen; so ist z.B. der Grenzwert em für den Wechsel von dem E- zu dem M-Stellkennfeld größer als der Grenzwert me für die Rückkehr von dem M- zu dem E-Stellkennfeld: em > me. Außerdem können bei bestimmten Fahrmanövern, z.B. bei der Bergfahrt, die Aktivierungsgrenzwerte verändert werden, z.B. die für das S-Stellkennfeld erhöht werden, weil das Signal "fahrer" bei der Bergfahrt schwächer bewertet werden muß.

Hier wird ein allgemeiner Vorteil der Fuzzy-Logik offenbar, nämlich, daß eine variable Bewertung der Eingangsgrößen vorgenommen wird, die unterschiedliche Schlußfolgerungen zuläßt. Hat zum Beispiel das Signal "fahrer" einen sehr großen Wert, so handelt es sich um eine kurzfristige Leistungsanforderung des Fahrers, z.B. beim Überholen. Diese quantitative Bewertung wird durch die Fuzzy-Logik vorgenommen und kann als solche besonders genutzt werden.

Die Matrix nach Figur 10 kann technisch durch einen Rechner mit entsprechendem Programm realisiert werden, das entsprechende Abfragen und Verzweigungen abarbeitet oder eine Tabelle aufweist, die abhängig von dem aktuellen Stellkennfeld SKF (t) adressiert wird. Der Rechner entnimmt dann die Aktivierungs-Grenzwerte und die Art des Vergleichs (">" oder "<" ) aus der Tabelle und legt das zu aktivierende neue Stellkennfeld durch Vergleich der Signale "fahrer" und "last" mit den Grenzwerten aus der Tabelle fest. In Figur 11 ist das gesamte Ablaufdiagramm der dabei ausgeführten Operationen dargestellt. Dieses Ablaufdiagramm ist selbsterklärend.

Die erfindungsgemäße Getriebesteuerung 6 führt mit ihrer dynamischen Korrekturschaltung 26 eine dynamische Korrektur - mit Verstellungsanpassung beim Wechsel des Stellkennfeldes - wie folgt durch. Anhand des aktiven Stellkennfelds SKF(t) wird zum Beispiel aus den Signalen dK und $n_{ab}$ die neue Soll-Motordrehzahl n_mot_s im Kennfeldspeicher 24 (Figur 2) als Vorgabe ermittelt.

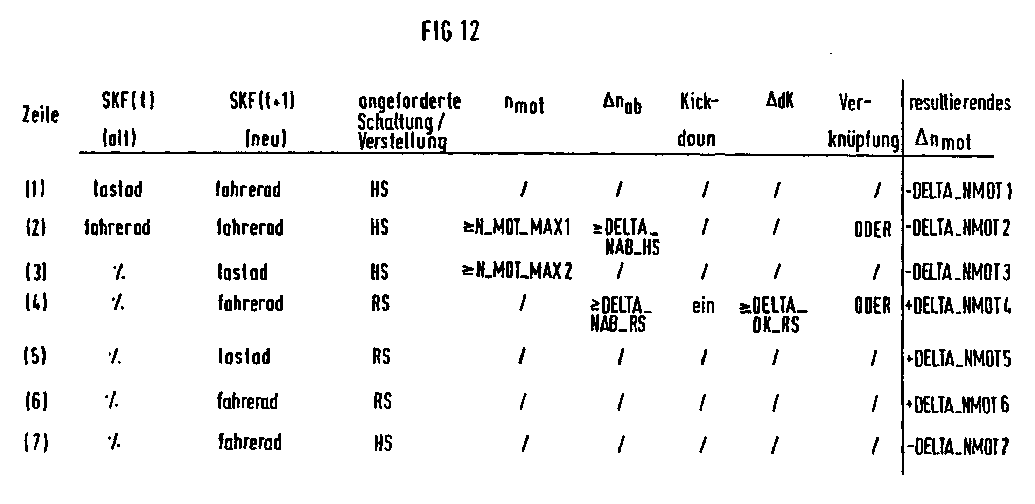

Es hat sich gezeigt, daß diese Vorgabe nicht sofort an den Übersetzungsregler 27 weitergegeben werden darf. Verstellungen der Soll-Motordrehzahl n_mot_s, die durch den Wechsel des fahreradaptiven Stellkennfeldes entstehen, können als störend empfunden werden, weil sie nicht im Zusammenhang mit einer für den Fahrer erkennbaren Aktion oder Umweltbedingung stehen (sogenanntes unmotiviertes Schalten). In diesen Fällen erfolgt eine "Verstellungsanpassung durch Wechsel des Stellkennfeldes", durch die solche Verstellungen oder Änderungen der Getriebeübersetzunglangsam durchgeführt oder in Verbindung mit einem Fahrmanöver, bei dem sie dem Fahrer plausibel erscheinen, schnell eingeleitet werden können (z.B. Rückschaltungen durch Wechsel auf ein lastadaptives Stellkennfeld beim Anfahren an einem Berg). Fahrmanöver, die eine Hochschaltung plausibel machen, sind z.B. eine hohe Motordrehzahl. Die Fälle des Zulassens von Verstellungen durch Wechsel des Stellkennfeldes sind in der Tabelle von Figur 12 zusammengefaßt.

Zeile 1 dieser Tabelle zum Beispiel behandelt den Fall, daß das Kraftfahrzeug eine Bergfahrt beendet und deshalb die Getriebesteuerung 6 von einem lastadaptiven auf ein fahreradaptives Stellkennfeld umschaltet, wodurch die Motor-Solldrehzahl verringert wird. Die neue Motor-Solldrehzahl n_mot_s(t+1) wird jedoch nicht sofort als Drehzahlsprung realisiert, sondern die Motordrehzahl wird mit einer Änderungsgeschwindigkeit DELTA_NMOT1 (mit der Einheit U/min/s) stetig an die neue Drehzahl herangeführt. Die Änderung kann nicht nur zeitabhängig, sondern auch abhängig von Betriebsparametern wie dem zurückgelegten Weg oder der Beschleunigung durchgeführt werden.

Zeile 4 von Figur 12 behandelt den Fall, daß eine Rückstellung, d.h. eine Erhöhung der Motordrehzahl, durch einen Wechsel auf ein fahreradaptives Stellkennfeld erfolgt. Sind dabei vorgegebene Bedingungen erfüllt, wie zum Beispiel das Fahrpedal schnell niedergetreten (d.h. $\Delta dK \geq DK\_RS$) oder ein "Kickdown"-Befehl gegeben worden, so wird eine Rückstellung schneller erfolgen, und zwar mit einer Änderungsgeschwindigkeit DELTA_NMOT4. Andernfalls verläuft sie mit einer Änderungsgeschwindigkeit DELTA_NMOT6, die kleiner ist, d.h. die Rückstellung erfolgt langsamer (siehe Zeile 6).

Eine weitere Vereinfachung und Verbesserung der vorstehend beschriebenen Funktionen wird dadurch erreicht, daß eine gfs. korrigierte Motor-Solldrehzahl n_mot_s(t) aus dem bisherigen Stellkennfeld SKF (t) berechnet und mit einer neuen Motor-Solldrehzahl n_mot_s(t+1) verglichen wird, die aus dem neuen Stellkennfeld SKF(t+1) berechnet wird. Ergibt der Vergleich identische Werte, so werden die neuen Werte und der damit verbundene Wechsel der Stellkennfelder zugelassen.

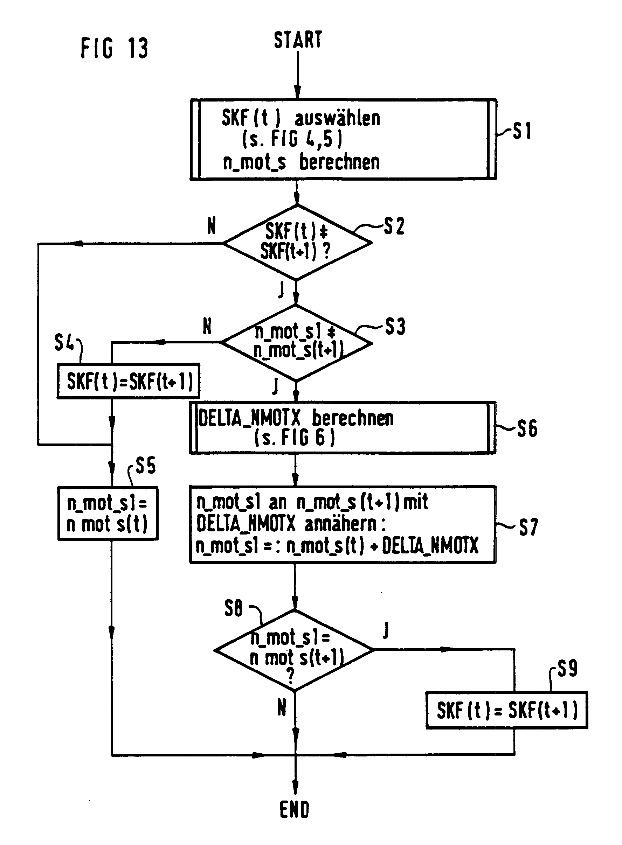

Aus Figur 13 ist ein Flußdiagramm ersichtlich, nach dem die vorstehend beschriebene dynamische Korrektur des Übersetzungsverhältnisses durchgeführt wird.

Nach dem Start des Programms wird in einem Block SI ein Stellkennfeld SKF (t) zu dem Zeitpunkt t ausgewählt, und zwar wie anhand der Figuren 10 und 11 beschrieben. Danach wird die Motor-Solldrehzahl n_mot_s berechnet.

In einem Schritt S2 wird abgefragt, ob das Stellkennfeld zum Zeitpunkt t ungleich dem Stellkennfeld zum Zeitpunkt t+1 ist. Wenn nicht, wird mit einem Schritt S5 fortgefahren, wenn ja geht es mit einem Schritt S3 weiter.

In dem Schritt S3 wird abgefragt, ob die aktuelle Motor-Solldrehzahl ungleich der Motor-Solldrehzahl zu dem Zeitpunkt t+1 ist. Wenn nicht, geht es mit einem Schritt S4, wenn ja mit einem Schritt S6 weiter.

In dem Schritt S5 wird die nachfolgende Motor-Solldrehzahl n_mot_s1 mit der Motor-Solldrehzahl zu dem Zeitpunkt t n_mot_s (t) gleichgesetzt. In dem Schritt S6 wird die Motordrehzahldifferenz DELTA NMOTX nach dem Diagramm von Figur 6 berechnet.

In einem Schritt S7 wird die korrigierte Soll-Motordrehzahl n_mot_s1 an die Soll-Motordrehzahl zu dem Zeitpunkt t+1 mit der Drehzahldifferenz DELTA_NMOTX (vgl. Figur 12)angenähert:

$$n\_mot\_s1 = n\_mot\_s (t) + DELTA\_NMOTX.$$

In einem Schritt S8 wird abgefragt, ob die einzustellende Soll-Motordrehzahl gleich der Soll-Motordrehzahl zu dem Zeitpunkt t+1 ist. Wenn ja wird:

In einem Schritt S9 wird das Stellkennfeld zu dem Zeitpunkt t SKF(t) gleich dem Stellkennfeld zu dem Zeitpunkt t+1 SKF(t+1), gesetzt, d.h. es wird auf das neue Stellkennfeld gewechselt.

Danach oder nach der Abfrage im Schritt S8, wenn die Abfrage mit nein beantwortet wird, ist das Programm beendet.

Der gemäß dem Programm nach Figur 13 für die einzustellende Soll-Motordrehzahl n_mot_s1 ermittelte Wert wird in der dynamischen Korrekturschaltung 26 gegebenenfalls erneut korrigiert.

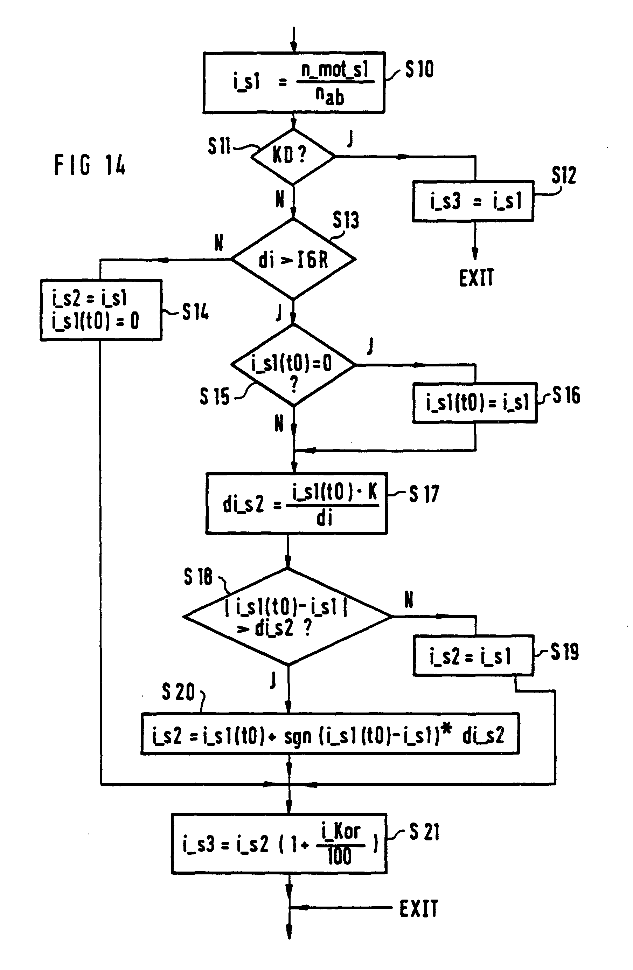

Mit dem Kennfeldspeicher 24 und der SKF Auswahl 25 wird eine Motor-Solldrehzahl berechnet, die weitgehend den Kriterien eines stationären Betriebs entspricht. Eine in der Korrekturschaltung zunächst ermittelte Motor-Solldrehzahl n_mot_s1 wird in einem Schritt S10 (Figur 14) in eine erste korrigierte Soll-Übersetzung i_s1 umgerechnet. Diese wird im weiteren Ablauf einer Korrektur durch einen relativen Korrekturwert di und durch einen absoluten Korrekturwert i_kor unterworfen, es sei denn, der Fahrer gibt mit einem Kick-down-Befehl KD die maximale Korrektur vor. Dies wird in einem Schritt S11 abgefragt.

Ist die Antwort auf die Abfrage ja, wird in einem Schritt S12 eine nachfolgende korrigierte Übersetzung i_s3 gleich der ersten Übersetzung i_s1 gesetzt und das Programm verlassen.

Damit der relative Korrekturwert di wirksam wird, muß er über einem Schwellwert IGR liegen. Dies wird in einem Schritt S13 abgefragt.

Liegt der relative Korrekturwert di nicht über diesem Schwellwert, so wird eine zweite Sollübersetzung i_s2 der ersten Sollübersetzung i_s1 gleichgesetzt und die erste Sollübersetzung zu einem Zeitpunkt $t_0$ gleich 0 gesetzt (Schritt S14).

Liegt der relative Korrekturwert di im Verlauf eines Fahrmanövers erstmals über dem Schwellwert IGR, so wird in einem Schritt S15 abgefragt, ob die vorliegende Sollübersetzung i_s1 (to) gleich 0 ist. Ist sie es, so wird sie gleich einem ersten Wert der Sollübersetzung i_s1 gesetzt (Schritt S16).

Die vorliegende Sollübersetzung dient dann als Basis für eine Verstellung der Übersetzung mit einem folgendermaßen berechneten relativen Korrekturwert (Schritt S17):

$$di\_s2 = \frac{i - s1(t_0) \cdot k}{di} \qquad (I)$$

Der Korrekturwert di_s2 legt ab einem Ausgangszeitpunkt to fest, wie stark sich die Anfangs-Sollübersetzung i_s (to) noch ändern darf. Sind beispielsweise die Konstanten k = 5 und di = 10, so wird der Korrekturwert **di_s2 = i_s1(to)*0,5**. Dies stellt in diesem Fall die noch erlaubte Variation um den Anfangssollwert i_s1($t_0$) dar.

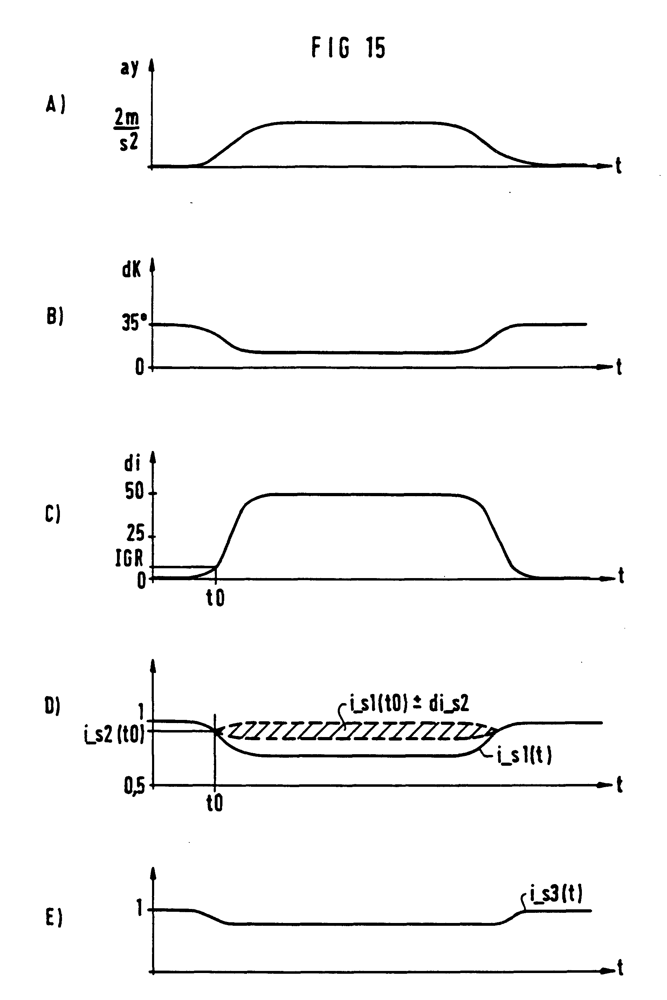

In Figur 15 werden die vorstehenden Vorgänge anhand eines Fahrmanövers verdeutlicht. In dem Diagramm A) ist die Querbeschleunigung ay dargestellt, die eine Kurvenfahrt erkennen läßt. Typisch ist auch die Einstellung dk der Drosselklappe durch den Fahrer, der das Gaspedal in der Kurve zurücknimmt (Diagramm B). Dadurch entsteht eine Absenkung der Soll-Motordrehzahl n_mot_s2, weil in dem Stellkennfeld z.B. nach Figur 10 oder 11 der Betriebspunkt des Motors wechselt. Die daraus resultierende Sollübersetzung $i\_s1(t) = n\_mot\_s1/n_{ab}$ ändert sich entsprechend (Diagramm D).

Durch die Fuzzy-Logik 23 wird dieses Fahrmanöver erkannt und ein entsprechender relativer Korrekturwert di ausgegeben (Diagramm C). Zu dem Zeitpunkt to wird die Übersetzung i_s1(to) abgespeichert. Aus der Gleichung I ergibt sich um diese Übersetzung herum ein Bereich, in dem die korrigierte Übersetzung liegt (Diagramm D). Liegt i_s2 außerhalb dieses Bereichs (Schritt S18 in Figur 8), so wird ein resultierendes Übersetzungsverhältnis

$$i\_s3 = i\_s2 - di\_s2$$

ermittelt (Schritte S20 und S21 von Figur 14) und tatsächlich eingestellt. Der Verlauf der resultierenden korrigierten Übersetzung i_s3 ist in Diagramm E über der Zeit t dargestellt. Auch in den Diagrammen A) bis D) ist als Abszisse jeweils die Zeit t aufgetragen. Hier wird der absolute Korrekturwert i_kor in Schritt S21 von Figur 14 gleich null angenommen.

Es wird deutlich, daß zu häufige Wechsel zwischen Hochstellungen und Rückstellungen der Sollübersetzung i_s1 (t) hier abgeschwächt werden. Es ist auch möglich, durch Verändern der Fuzzy-Regelbasis den Eingriff in die Übersetzungsänderung durch einen größeren relativen Korrekturwert di zu verstärken. Damit kann die Übersetzung bei derartigen Fahrmanövern fixiert werden. Die Funktion läßt sich also durch Verändern des relativen Korrekturwertes di wunschgemäß dimensionieren, was mit den Eigenschaften der Fuzzy-Logik sehr gut harmoniert. Das anhand von Figur 14 erläuterte Programm ergibt sozusagen einen relativen Verstellungseingriff. Diese Funktion des Festhaltens der Übersetzung ist außer bei der hier erläuterten Kurvenfahrt auch im Schubbetrieb oder bei Bergabfahrten des Kraftfahrzeugs zweckmäßig, da ein Festhalten der Übersetzung eine Motorbremswirkung erzeugt.

Die Übersetzung i_s2 kann darüber hinaus noch durch einen "absoluten Verstellungeingriff" mit dem absoluten Korrekturwert i_kor korrigiert werden (Schritt S21 in Figur 14). Der absolute Korrekturwert i_kor kann beispielsweise Werte von -50 bis +50 annehmen, dadurch wird die Übersetzung i_s2 um $\pm 50\,\%$ verändert. Damit läßt sich auch das Abtriebsmoment an dem Getriebeausgang entsprechend beeinflussen. Dies ist besonders nützlich, wenn signifikante Schlupfzustände an den Antriebsrädern durch ein Längsschlupf-Signal Sx angezeigt werden. In diesem Fall kann das Motordrehmoment zusätzlich über ein an die Motorsteuerung 3 übermitteltes Eingriffssignal beeinflußt werden. Die Motorsteuerung 3 reduziert daraufhin das Motordrehmoment, z.B. durch Verstellen der Zündung oder der Drosselklappe oder durch Zylinderabschaltung.

In anderen Fällen kann es zweckmäßig sein, das Motordrehmoment kurzfristig zu erhöhen. So ist bei schneller Ruhigstellung der Übersetzung von stufenlosen Getrieben der Effekt bekannt, daß die Motordrehzahl kurzfristig - d.h. für 0,5 bis 1,5 s - abfällt, weil das Getriebe viel Drehmoment für den Verstellvorgang benötigt. Dieser Effekt ist deshalb besonders störend, da ja mit einer derartigen Verstellung meistens ein Beschleunigungsvorgang eingeleitet wird. Übermittelt nun hier die Getriebesteuerung 6 an die Motorsteuerung 3 ein Eingriffssignal, das das Motordrehmoment erhöht, so wird der störende kurzfristige Drehzahlabfall und der damit verbundene Beschleunigungseinbruch verhindert.

Andere Gründe für einen absoluten Verstellungseingriff können Befehle des Antiblockiersystems 13 oder einer Radschlupfregelung 12 sein. In ersterem Fall wird die Übersetzung so verstellt, daß ein möglichst geringes Schleppmoment an den Antriebsrädern auftritt. Die Radschlupfregelung 12 kann die Übersetzung so verstellen, daß der Radschlupf der Antriebsräder abgebaut wird.

Der Übersetzungsregler 27 (Figur 2) stellt gemäß der jeweiligen Vorgabe die Motordrehzahl n_mot gemäß der Beziehung

$$n\_mot = i\_s3 * n_{ab}$$

ein. Dazu ist mindestens ein Stellglied erforderlich, das z.B. aus einem bekannten Ventil besteht, das die Übersetzung beeinflußt.

## Patentansprüche

1. Steuerung für ein automatisches Kraftfahrzeug-Getriebe (5), die eine mit mindestens einer Regelbasis (29) versehene Fuzzy-Logik (23) aufweist,

   -- durch welche die Übersetzung des Getriebes in Abhängigkeit von dem Fahrerwunsch und der Fahrzeuggeschwindigkeit (nab) anhand von in Kennfeldern abgespeicherten Daten eingestellt wird, und

   - durch welche der Lastzustand des Kraftfahrzeugs und der Fahrstil des Fahrers bei der Auswahl des Kennfelds berücksichtigt werden;

   **dadurch gekennzeichnet, daß**
   die Getriebesteuerung (6) aufweist:

   - mehrere vorgegebene lastadaptive und fahreradaptive Stellkennfelder (E, M, S, beziehungsweise TA, A) oder die Stellkennfelder (E, M, S, beziehungsweise TA, A) ersetzende Regelbasen (Regel 1 - Regel 4), über die die Motordrehzahl (nmot) auf eine Soll-Motordrehzahl (n_mot_s) durch eine stufenlose Regelung der Übersetzung (i) eingestellt wird, und

- eine mit der Fuzzy-Logik (23) verbundene Korrekturschaltung (26), an die die Fuzzy-Logik (23) unter Berücksichtigung des fahrdynamischen Zustands des Kraftfahrzeugs einen relativen Korrekturwert (di), durch den Verstellungen der Übersetzung (i) eingeschränkt werden, oder einen absoluten Korrekturwert, (i-kor), durch den Verstellungen der Übersetzung (i) aktiv bestimmt werden, übermittelt,

und daß durch die Fuzzy-Logik (23) außerdem eine erhöhte Fahrzeugbeladung bei der Einstellung der Übersetzung (i) berücksichtigt wird.

2. Steuerung nach Anspruch 1, dadurch gekennzeichnet, daß sie eine mit der Fuzzy-Logik (23) verbundene Signalaufbereitungsschaltung (22) aufweist, durch welche ein Signal, das die Fahrpedal- oder Drosselklappenstellung (dK) wiedergibt, über eine vorgegebene Zeitspanne gemittelt wird.

3. Steuerung nach einem der vorhergehenden Ansprüche, dadurch gekennzeichnet, daß durch die Signalaufbereitungsschaltung (22) die Differenz von jeweils zwei Signalen, die in aufeinanderfolgenden Zeitintervallen die Querbeschleunigung (ay) des Kraftfahrzeuges wiedergeben, gebildet und zur Erkennung des Beginns einer Kurvenfahrt verwendet wird.

4. Steuerung nach einem der vorhergehenden Ansprüche, dadurch gekennzeichnet, daß durch die Signalaufbereitungsschaltung (22) die Häufigkeit der Verstellung des Fahrpedals (ddk) während eines vorgegebenen Zeitintervalls (z) ermittelt und zur Bewertung des Fahrstils des Fahrers verwendet wird.

5. Steuerung nach einem der vorhergehenden Ansprüche, dadurch gekennzeichnet, daß durch die Signalaufbereitungsschaltung (22) der Betrag der Differenz ($\Delta F$) aus der Antriebs- und Bremskraft sowie den Fahrwiderständen des Kraftfahrzeugs in der Ebene gebildet und über eine vorgegebene Zeitspanne gemittelt wird, und daß aus dem erhaltenen Mittelwert der Fahrbahntyp und die Beladung des Kraftfahrzeugs ermittelt werden.

6. Steuerung nach einem der vorhergehenden Ansprüche, dadurch gekennzeichnet, daß die zur Steuerung der Übersetzung verwendeten Daten in mit der Signalaufbereitungsschaltung (22) verbundenen Kennfeldern (SKF1,..., SKFn) abgelegt sind oder daß sie von einer zweiten Fuzzy-Logik erzeugt werden.

7. Steuerung nach einem der vorhergehenden Ansprüche, dadurch gekennzeichnet, daß durch die Fuzzy-Regelbasis ein Kennfeld (SKF) in Abhängigkeit von dem jeweils vorherigen Kennfeld, einem den Fahrstil des Fahrers charakterisierenden ersten Auswahlsignal (33) und einem den Lastzustand des Kraftfahrzeugs charakterisierenden zweiten Auswahlsignal (32) festgelegt oder verändert wird.

8. Steuerung nach einem der vorhergehenden Ansprüche, dadurch gekennzeichnet, daß durch die Fuzzy-Regelbasis (29) ein Kennfeld (SKF) in Abhängigkeit von einem die Art der befahrenen Fahrbahn charakterisierenden dritten Auswahlsignal (straße/umwelt) festgelegt oder verändert wird.

9. Steuerung nach einem der vorhergehenden Ansprüche, dadurch gekennzeichnet, daß ein Kennfeld durch punktweises Verschieben von Übersetzungswertzuweisungen verändert wird.

10. Steuerung nach einem der vorhergehenden Ansprüche, dadurch gekennzeichnet, daß durch die Fuzzy-Logik (23) Verstellungen der Übersetzung nur langsam oder nur dann durchgeführt werden, wenn sie für den Fahrer einleuchtend sind.

**Claims**

1. Controller for an automatic motor vehicle transmission (5), which has a fuzzy logic unit (23) provided with at least one rule base (29),

-- by means of which the gear ratio of the transmission is set as a function of the driver's wish, and the vehicle speed (nab) is set with the aid of data stored in characteristic diagrams, and

- by means of which the load state of the motor vehicle and the driving style of the driver are taken into account when selecting the characteristic diagram;

characterized in that
the transmission controller (6) has:

- several prescribed load-adaptive and driveradaptive actuating characteristic diagrams (E, M, S, and TA, A, respectively) or rule bases (Rule 1 - Rule 4) replacing the actuating characteristic diagrams (E, M, S, and TA, A, respectively), via which the engine speed (nmot) is set to a desired motor speed (n_mot_s) by an infinitely variable control of the gear ratio (i), and

- a correction circuit (26) which is connected to the fuzzy logic unit (23) and to which, taking account of the state of the driving dynamics of the motor vehicle, the fuzzy logic unit (23) transmits a relative correction value (di) which limits adjustments of the gear ratio (i), or an absolute correction value (i-kor) which actively determines adjustments of the gear ratio (i),

and in that, in addition, the fuzzy logic unit (23) takes account of an increased vehicle loading when setting the gear ratio (i).

2. Controller according to Claim 1, characterized in that it has a signal-conditioning circuit (22) which is connected to the fuzzy logic unit (23) and which is used to average over a prescribed time interval a signal representing the accelerator pedal or throttle position (dk).

3. Controller according to one of the preceding claims, characterized in that the difference between in each case two signals which represent in sequential time intervals the transverse acceleration (ay) of the motor vehicle is formed by the signal-conditioning circuit (22) and is used to detect the beginning of cornering.

4. Controller according to one of the preceding claims, characterized in that the frequency of the adjustment of the accelerator pedal (ddk) is determined during a prescribed time interval (z) by the signal-conditioning circuit (22) and used to evaluate the driver's driving style.

5. Controller according to one of the preceding claims, characterized in that the absolute value of the difference (ΔF) between the drive and braking forces and the driving resistances of the motor vehicle on the flat is formed by the signal-conditioning circuit (22) and averaged over a prescribed time interval, and in that the roadway type and the loading of the motor vehicle are determined from the mean value obtained.

6. Controller according to one of the preceding claims, characterized in that the data used to control the gear ratio are stored in characteristic diagrams (SKF1, ..., SKFn) connected to the signal-conditioning circuit (22), or in that they are generated by a second fuzzy logic unit.

7. Controller according to one of the preceding claims, characterized in that the fuzzy rule base fixes or changes a characteristic diagram (SKF) as a function of the respective previous characteristic diagram, a first selection signal (33) characterizing the driver's driving style and a second selection signal (32) characterizing the load state of the motor vehicle.

8. Controller according to one of the preceding claims, characterized in that the fuzzy rule base (29) fixes or changes a characteristic diagram (SKF) as a function of a third selection signal (road/environment) characterizing the type of the roadway being driven on.

9. Controller according to one of the preceding claims, characterized in that a characteristic diagram is changed by pointwise displacement of gear ratio value assignments.

10. Controller according to one of the preceding claims, characterized in that the fuzzy logic unit (23) carries out corrections of the gear ratio only slowly or only whenever they are obvious to the driver.

**Revendications**

1. Commande (6) pour une boîte de vitesses automatique (5) de véhicule automobile qui comporte une logique floue (23) munie au moins d'une base de règles (29),

-- par laquelle le rapport de la boîte de vitesses est réglé en fonction du souhait du conducteur et de la vitesse du véhicule ($n_{ab}$) à l'aide de données mémorisées dans des familles de courbes caractéristiques, et

- par laquelle l'état de charge (32) du véhicule automobile et le style de conduite (33) du conducteur sont pris en compte lors de la sélection de la famille de courbes caractéristiques ;

caractérisée par le fait
que la commande de boîte de vitesses (6) comporte :

- plusieurs familles de courbes caractéristiques réglantes prescrites adaptées au conducteur et adaptées à la charge (E, M, S, respectivement TA, A) ou plusieurs règles de base (règle 1 à règle 4) remplaçant les familles de courbes caractéristiques réglantes (E, M, S, respectivement TA, A), par l'intermédiaire desquelles la vitesse de rotation du moteur ($n_{mot}$) est réglée sur une vitesse de rotation de consigne du moteur (n_mot_s) par un réglage continu du rapport (i) et

- un circuit de correction (26) qui est relié à la logique floue (23) et auquel la logique floue (23) transmet, en tenant compte de l'état dynamique de déplacement du véhicule automobile, une valeur correctrice relative (di) par laquelle des réglages du rapport (i) sont limités ou une valeur correctrice absolue (i_kor) par laquelle des réglages du rapport (i) sont déterminés actifs, et que la logique floue (23) tient compte en outre d'une charge accrue du véhicule lors du réglage du rapport (i).

2. Commande selon la revendication 1, caractérisée par le fait qu'elle comporte un circuit de préparation de signal (22) qui est relié à la logique floue (23) et qui fait la moyenne sur un intervalle de temps prescrit d'un signal qui traduit la position de pédale d'accélérateur ou de papillon des gaz (dK).

3. Commande selon l'une des revendications précédentes, caractérisée par le fait que la différence entre deux signaux qui traduisent l'accélération transversale (ay) du véhicule automobile dans des intervalles de temps successifs est formée par le circuit de préparation de signal (22) et est utilisée pour la détection du début d'une courbe.

4. Commande selon l'une des revendications précédentes, caractérisée par le fait que la fréquence du déplacement de la pédale d'accélérateur (ddk) pendant un intervalle de temps prescrit (z) est déterminée par le circuit de préparation de signal (22) et est utilisée pour l'évaluation du style de conduite du conducteur.

5. Commande selon l'une des revendications précédentes, caractérisée par le fait que la valeur absolue de la différence ($\Delta F$) est formée par le circuit de préparation de signal (22) à partir de la force motrice et de la force de freinage ainsi que des résistances au déplacement du véhicule automobile dans le plan, que sa moyenne sur un intervalle de temps prescrit est calculée et que le type de route et la charge du véhicule automobile sont déterminés à partir de la valeur moyenne obtenue.

6. Commande selon l'une des revendications précédentes, caractérisée par le fait que les données utilisées pour la commande du rapport sont mémorisées dans des familles de courbes caractéristiques (SKF1, ..., SKFn) reliées au circuit de préparation de signal (22) ou qu'elles sont produites par une deuxième logique floue.

7. Commande selon l'une des revendications précédentes, caractérisée par le fait qu'une famille de courbes caractéristiques (SKF) est fixée ou modifiée par la base de règles floues en fonction de la famille de courbes caractéristiques respectivement précédente, par un premier signal de sélection (33) caractérisant le style de conduite du conducteur et par un deuxième signal de sélection (32) caractérisant l'état de charge du véhicule automobile.

8. Commande selon l'une des revendications précédentes, caractérisée par le fait qu'une famille de courbes caractéristiques (SKF) est fixée ou modifiée par la base de règles floues (29) en fonction d'un troisième signal de sélection (route/environnement) caractérisant le type de route parcourue.

9. Commande selon l'une des revendications précédentes, caractérisée par le fait qu'une famille de courbes caractéristiques est modifiée par un déplacement point par point d'attributions de valeur de rapport.

10. Commande selon l'une des revendications précédentes, caractérisée par le fait que des réglages du rapport ne sont effectués par la logique floue (23) que lentement ou que lorsqu'ils sont évidents pour le conducteur.

FIG 1

FIG 2

FIG 3

FIG 4

FIG 5

FIG 6

FIG 7

237

237

30
255

30
255

0|0

$n_{mot}$
[32 U/min]

dk [0,4°]

$n_{ab}$ [32 U/min]

FIG 8

237

237

30
255

30
255

0|0

$n_{mot}$
[32 U/min]

dk [0,4°]

$n_{ab}$ [32 U/min]

FIG 9

## FIG 10

| SKF $\quad$ t+1 (neu) $\quad$ t(alt) | E(1) | M(2) | S(3) | TA(4) | A(5) |
|---|---|---|---|---|---|
| **fahrer-adaptiv** — E | fahrer < em | fahrer > em | fahrer > ms | last > xta ∧ fahrer < ms | last > xa |
| **fahrer-adaptiv** — M | fahrer < me | ms > fahrer > me | fahrer > ms | last > xta ∧ fahrer < ms | last > xa |
| **fahrer-adaptiv** — S | fahrer < me | fahrer < sm | fahrer > sm | nicht möglich | last > xa |
| **last-adaptiv** — TA | last < tax ∧ fahrer < me | last < tax ∧ ms > fahrer > em | fahrer > ss | last > tax | last > xa |
| **last-adaptiv** — A | last < xa ∧ fahrer < me | last < xa ∧ ms > fahrer > em | last < xa ∧ fahrer > ms | last > ax ∧ fahrer < ms | last > ax ∧ fahrer < ms |

## FIG 11

```
                    ┌─────────┐
                    │  Start  │
                    └────┬────┘
                         │
   ┌─────────────────────┴─────────────────────┐
   │ Grenzen aus Tabelle "SKF- Selektion"       │
   │ holen mit Zeiger SKF(t)                    │
   └─────────────────────┬─────────────────────┘
                         │
   ┌─────────────────────┴─────────────────────┐
   │ "last","fahrer" mit Grenzen vergleichen    │
   └─────────────────────┬─────────────────────┘
                         │
   ┌─────────────────────┴─────────────────────┐
   │ Zuordnung von SKF(t+1)                     │
   └─────────────────────┬─────────────────────┘
                         │
```

(lastad SKF sofort übernehmen) N ← SKF(t+1) =fahreradaptiv ?

J → SKF(t+1) > SKF(t) ? → N → Timer "Haltezeit" ab ?

J → Timer "Haltezeit" starten

SKF(t) = SKF(t+1) (neues SKF übernehmen)

SKF(t) unverändert für Haltezeit

N

Ende

## FIG 12

| Zeile | SKF(t) (alt) | SKF(t+1) (neu) | angeforderte Schaltung / Verstellung | $n_{mot}$ | $\Delta n_{ab}$ | Kick-doun | $\Delta dK$ | Ver-knüpfung | resultierendes $\Delta n_{mot}$ |
|---|---|---|---|---|---|---|---|---|---|
| (1) | lastad | fahrerad | HS | / | / | / | / | / | -DELTA_NMOT 1 |
| (2) | fahrerad | fahrerad | HS | $\geq$N_MOT_MAX1 | $\geq$DELTA_NAB_HS | / | / | ODER | -DELTA_NMOT 2 |
| (3) | ./. | lastad | HS | $\geq$N_MOT_MAX2 | / | / | / | / | -DELTA_NMOT 3 |
| (4) | ./. | fahrerad | RS | / | $\geq$DELTA_NAB_RS | ein | $\geq$DELTA_DK_RS | ODER | +DELTA_NMOT 4 |
| (5) | ./. | lastad | RS | / | / | / | / | / | +DELTA_NMOT 5 |
| (6) | ./. | fahrerad | RS | / | / | / | / | / | +DELTA_NMOT 6 |
| (7) | ./. | fahrerad | HS | / | / | / | / | / | -DELTA_NMOT 7 |

EP 0 739 465 B1

**FIG 13**

START

SKF(t) auswählen
(s. FIG 4,5)
n_mot_s berechnen — S1

N ← SKF(t) ‡ SKF(t+1) ? — S2

J

S4 — N ← n_mot_s1 ‡ n_mot_s(t+1) — S3

SKF(t)=SKF(t+1)

J

DELTA_NMOTX berechnen
(s. FIG 6) — S6

S5 — n_mot_s1 = n_mot_s(t)

n_mot_s1 an n_mot_s(t+1) mit
DELTA_NMOTX annähern:
n_mot_s1 =: n_mot_s(t) + DELTA_NMOTX — S7

S8 — n_mot_s1 = n_mot_s(t+1) ? — J

N — S9 — SKF(t) = SKF(t+1)

END

FIG 14

$$i\_s1 = \frac{n\_mot\_s1}{n_{ab}}$$ — S 10

S 11 — KD ?

J → $i\_s3 = i\_s1$ — S 12 → EXIT

N

$di > I6R$ — S 13

N → $i\_s2 = i\_s1$
$i\_s1(t0) = 0$ — S 14

J

$i\_s1(t0) = 0$ ? — S 15

J → $i\_s1(t0) = i\_s1$ — S 16

N

$$di\_s2 = \frac{i\_s1(t0) \cdot K}{di}$$ — S 17

S 18 — $| i\_s1(t0) - i\_s1 | > di\_s2$ ?

N → $i\_s2 = i\_s1$ — S 19

J

S 20 — $i\_s2 = i\_s1(t0) + sgn\,(i\_s1(t0) - i\_s1)* di\_s2$

$$i\_s3 = i\_s2\left(1 + \frac{i\_Kor}{100}\right)$$ — S 21

EXIT

# FIG 15